# EUROPEAN PATENT APPLICATION

(11) **EP 4 450 713 A1**
(43) Date of publication of application: **23.10.2024**
(21) Application number: 24170902.1
(22) Date of filing: 17.04.2024
(51) Int. Cl.: E02B 17/02, E02B 17/00

(54) **METHOD AND ASSOCIATED APPARATUS**

(30) Priority: 21.04.2023 GB 202305918
(71) Applicant: Aker Solutions AS, 1325 Lysaker (NO)
(72) Inventor: DUFSETH, Eirik, 3121 Nøtterøy (NO); LIMA, Roger, 4352 Klepp (NO); FUGLESTAD, Ingve, 4324 Sandnes (NO)
(74) Representative: HGF

(57) **Abstract**

Methods of constructing marine support structures for offshore installations. The methods involve forming a portion of the marine support structure as a concrete structure to support the offshore installation thereon or thereabove. A passageway for receiving at least one line is provided in the concrete structure, with the passageway being provided or formed within the concrete structure during the concrete formation process.

## Description

The present invention relates to a method of construction, particularly, but not exclusively, construction of a marine concrete structure.

### BACKGROUND

In various industries, such as the renewables, oil/gas and utilities industries, structures are often required to support installations thereon or thereabove.

Often such structures can be in marine locations, such as floating, semi-submersible or protruding above the sea level. Various anchoring, tethering and support structures have been employed for such offshore structures. For example, concrete structures can be produced by slipforming, whereby the formwork is moved as the concrete is cast, effectively re-using the formwork to cast sections of concrete larger (e.g. higher) than the formwork as such. Formwork can be used to effectively cast the concrete into shape, typically with a progressively-changing cross-section (e.g. tapering).

Concrete structures/foundations for the offshore energy sector typically include one or more pull-tubes for Cables and/or Umbilicals, depending on the specific field layout and requirement for each structure/foundation. Such pull-tubes can either be routed and supported external to the structure, typical for floaters (SEMI or SPAR); or internally within the structure, typical for bottom-fixed structures, often referred to as Gravity Base Structures (GBS).

Traditionally, pull-tubes for Cables and Umbilicals for concrete structures/foundations have been provided as steel pipes subsequently mounted to an interior or exterior wall of the structure. The pull-tubes are effectively assembled or retrofitted to the concrete structures following their formation, sometimes supported by steel plates that are fixed (or embedded) in the concrete walls of the structures.

For GBS, the pipes are typically routed inside the structure, penetrating through the outer concrete wall just above the concrete base slab and routed up through the GBS to a hang-off deck at the top of the structure above water level. The steel pipes are installed after casting of the concrete, using scaffolding or other means of access arrangements to be erected within the structures. For SEMIs, the pipes are typically routed external to the structure from the base of the structure up to an external hang-off deck at the top of the structure above water level. Similar to GBS, the steel pipes are installed after casting of the concrete, requiring scaffolding or other means of access arrangements to be erected external to the structures. For the deeper draught SPARs, the pipes are typically routed external to the structure from some level below waterline (typically below the mooring attachments) up along the upper part of the structure up to an external hang-off deck at the top of the structure above water level. Installation of large bore and heavy steel pipes and supports during a continuous casting/slipforming operation would be impractical. Therefore the steel pipes are traditionally installed after casting of the concrete, possibly requiring stops in the slipforming operation and scaffolding or other means of access arrangements to be erected external to the structures.

It may be an object of one or more aspects, examples, embodiments, or claims of the present disclosure to at least mitigate or ameliorate one or more problems associated with the prior art, such as those described herein or elsewhere.

### SUMMARY

According to an aspect there is provided a method of construction. The method may comprise a method of installing a structure. The method may comprise a construction of the structure. According to an aspect, there is provided a system for performing the method.

In at least some examples, there is provided a method of constructing a support structure. The support structure may comprise a marine support structure. The support structure may comprise an offshore support structure. The support structure may comprise an at least partially submerged or subsea structure. The support structure may be for or part of an offshore installation, such as an offshore energy installation. The offshore energy installation may be a renewable energy installation, such as a wind turbine/s.

In at least some examples, there is provided a method of constructing a support structure with an integrally-formed conduit or passageway. The conduit may be formed simultaneously with the structure. In at least some examples, the conduit may be formed or provided in a same concrete forming step as the structure. For example, the passageway may be formed or encased by cast concrete during a general concrete casting process or step for forming the concrete structure as such. Additionally, or alternatively, the passageway may be formed or encased by cast concrete during a specific concrete casting process or step. For example, the passageway may be formed or encased by cast concrete during a subsequent concrete casting process or step, such as a concrete casting step for forming a pilaster on top of previously cast concrete. The method may comprise providing the conduit as part of the structure-formation process. The conduit may be formed contemporaneously with an adjacent portion/s of structure. The conduit may be provided by forming the portion/s of structure around the conduit. In at least some examples, the conduit may be at least partially defined by the adjacent structure. For example, the adjacent structure may define a longitudinal conduit therein or therethrough, with the adjacent structure surrounding the conduit.

Accordingly, there may be provided a method of constructing a marine support, the method comprising a concrete casting wherein at least a portion of a passageway for a line is provided within the concrete structure. The method may provide benefits over existing or alternative methods. For example, installation of large bore and heavy steel pipes and supports (similar to those used for existing retro-fitted pull-tubes) during a continuous casting/slipforming operation could be challenging and not practical, and would require additional resources and/or result in slower/less efficient casting operations than when the passageway is formed as integrally-formed with the structure.

The passageway may comprise a conduit. The conduit may comprise a pull-tube. The conduit may be for a cable/s and/or umbilical/s. The cable/s may comprise a power and/or a signal cable/s. For example, a plurality of cables, such as including a power cable and a signal cable, may be housed within the conduit.

The method may comprise lining the conduit. The method may comprise lining the conduit before, during or after the formation process. In at least some examples, the method may comprise partially lining the conduit.

The conduit may comprise a lined conduit for at least a portion of the longitudinal length of the conduit. The conduit may be lined during the conduit formation process. The conduit may be lined during the concrete casting process. The conduit may remain lined after the concrete casting process. The conduit may be lined with one or more of: a metal liner, such as steel; a plastic liner, such as a polymeric liner (e.g. ABS, PP, PVC, HDPE, etc.); a composite liner.

The method may comprise forming the conduit with formwork. For example, the method may comprise forming the conduit with a longitudinal member in place during the concrete forming process. The longitudinal member may comprise a hollow member, such as a tube. The longitudinal member may remain in situ following formation of the conduit (e.g. to define the conduit as a lined conduit, the longitudinal member comprising the conduit lining). Alternatively, the longitudinal member may be moved or removed, such as during or after the concrete forming process. For example, the longitudinal member may be moved during or after the concrete forming process, such as along or together with other formwork for forming the concrete. In at least some examples, the concrete forming process comprises a slipforming process, whereby the formwork, including the longitudinal member, is progressively or sequentially moved (e.g. upwards) during concrete formation.

The method may comprise removing at least a portion of the formwork for forming the passageway in the concrete. For example, the method may comprise removing the passageway formwork during or after the concrete structure formation process. Accordingly, the passageway may comprise an unlined passageway, along at least a portion of the passageway. As such, the passageway may be a concrete passageway, with a concrete wall/s defining a surface/ of the passageway (e.g. a cylindrical or prismatic concrete passageway).

The method may comprise forming the passageway, or at least a portion/s thereof, without subtractive manufacturing. For example, the method may comprise forming at least portions of the passageway within the structure without requiring material removal, such as by drilling, boring, milling, reaming or the like, to form the portions of passageway. The method may comprise forming at least a portion/s of the passageway in the concrete structure during an additive concrete formation process. The method may comprise providing the passageway on and/or through the concrete structure such that subtractive manufacturing is eliminated or at least mitigated.

The method may comprise enclosing at least a portion/s of the passageway in or with concrete. The passageway may be defined as a longitudinal conduit within the concrete structure. The passageway may be encased by concrete. The passageway may be enclosed by concrete such that the passageway is protected by concrete along at least a portion of the passageway's length. The passageway may be encircled by concrete around an entirety of a periphery or circumference of the passageway, along at least a portion/s of the passageway's length.

The method may comprise providing a straight section/s of passageway. Additionally, or alternatively, the method may comprise providing a curved or bent section/s of passageway. For example, the passageway may be shaped to correspond to the structure, such as to correspond to a side or cross-sectional profile or view of the structure. The method may comprise extending the passageway after concrete formation. For example, the method may comprise connecting a pipe, spool or tube section to longitudinally extend the passageway. The extension may be from the concrete structure, such as to provide a section of passageway not encased by concrete. Alternatively, the section may be at least partially within the concrete structure, such as by at least partially inserting pipe, spool or tube section into the concrete structure. The method may comprise providing one or more bell mouths or cones connected to or in the passageway. The bell mouths/cones may be provided at terminal ends of the passageway. Additionally or alternatively, the bell mouths/cones may be provided at an intermediate portion/s of the passageway. For example, the bellmouths/cones may be provided at a transition of the passageway, such as between projections of passageway (e.g. changes in angle, route, etc.) or changes in passageway properties (e.g. materials and/or diameters, etc.).

The method may comprise a secondary concrete step. For example, the method may comprise casting the pipe, spool or tube section and/or the bellmouth(s)/cone(s) in concrete in a secondary step, after substantive formation of the concrete structure in a first concreting step (e.g. slipforming).

The method may comprise providing a plurality of passageways. The method may comprise providing a plurality of passageways in a single pilaster. Additionally, or alternatively, the method may comprise providing the plurality of passageways in a plurality of pilasters. The method may comprise adapting the concrete-forming process to accommodate or account for the size and weight of a pilaster for multiple pull-tubes. For example, a slipforming operation may be configured to accommodate the additional weight on a single side of the structure (weight eccentricity). For example, the method may comprise providing at least a pair of pilasters on (diametrically) opposite sides of the structure. Each pilaster may comprise a similar number of passageways. For example, each pilaster may comprise a single passageway. Alternatively, the respective pilasters may comprise different numbers of passageways (e.g. a single pilaster with a single passageway and another pilaster with two or more passageways therein). The multiple pilasters may be spaced or distributed along and/or around the structure. For example, a pair of pilasters may be spaced to balance volume and/or weight distribution in or around the structure. There may be a plurality of (spaced) pilasters in or around a single concrete structure, each pilaster housing a plurality of passageways.

According to at least some examples, there is provided a method of constructing a marine support structure for an offshore installation, the method comprising:
forming at least a portion of the marine support structure as a concrete structure with a concrete formation process, the concrete structure being configured to support the offshore installation thereon or thereabove;
   providing a passageway for receiving at least one line therein;
wherein the method comprises providing the passageway within the concrete structure during the concrete formation process.

The passageway may comprise a pull-tube for running the line between first and second positions of the structure, the first and second positions being vertically spaced from each other. Additionally, or alternatively, the first and second positions may be laterally-spaced from each other. For example, the first and second positions may be spaced by a horizontal separation. In at least some examples, the first and second positions may be laterally spaced associated with a change in radius (e.g. of the structure) corresponding to the respective locations of first and second positions. The method may comprise running the line through the passageway, The at least one line may comprise one or more of: a cable; an umbilical; and/or a tube.

The method may comprise forming the passageway within the concrete structure during the concrete formation process rather than thereafter. The concrete forming process may comprise a concrete casting formation, such as slipforming. The method may comprise constructing an offshore support structure for an offshore energy installation such as a wind turbine. The passageway may be formed internally within the concrete structure, with the passageway being surrounded by concrete for an entire periphery, such as in cross-sectional view, along a longitudinal portion of the passageway. The passageway may be formed within a portion of locally-increased thickness, the portion of locally-increased thickness being defined relative to an adjacent, such as horizontally-adjacent, portion of the concrete structure. The portion of locally-increased thickness may represent a protrusion, with the passageway being associated with a pilaster of the concrete structure. The pilaster may be formed internally, with the portion of locally-increased thickness extending towards an interior of the concrete structure. Additionally, or alternatively, the pilaster may be formed externally, with the portion of locally-increased thickness extending outwards from the concrete structure. In at least some examples, the pilaster may extend both inwardly and outwardly. The pilaster may extend inwardly and outwardly along at least a portion of the passageway. For example, where the passageway transitions from being situated on an exterior of the structure to an interior of the structure (or vice versa), there may be overlapping portions of outwardly-extending pilaster and inwardly-extending pilaster. Additionally, or alternatively, there may be a plurality of pilasters with both at least one inwardly-extending pilaster and at least one outwardly-extending extending pilaster. The respective inwardly- and outwardly- extending pilasters may be proximal, such as circumferentially aligned or overlapping. Alternatively, the respective inwardly- and outwardly- extending pilasters may be spaced, such as at different locations spaced around the circumference or perimeter of the structure (e.g. with an outwardly-extending pilaster circumferentially offset from an inwardly-extending pilaster).

The passageway may be defined by hollow formwork during the concrete forming step. The hollow formwork may remain in situ after completion of the concrete formation such that the hollow formwork defines an interior volume of the passageway along at least a portion of the length of the passageway. Alternatively, the formwork may be removed after formation of the passageway. The passageway may be lined after formation. For example, a liner, such as of plastic or steel, may inserted into the passageway. Accordingly, the passageway may comprise: a hollow, unlined concrete passageway with a concrete passageway wall defining the pull-tube for at least a portion of the pull-tube; a hollow, lined concrete passageway with the formwork being the lining after passageway formation; a hollow, lined concrete passageway with the formwork and an additional liner/tube (e.g. inserted before or after concrete casting) lining the pull-tube; or a hollow, lined concrete passageway without the formwork, but with the additional liner/tube inserted after concrete formation.

The method may comprise providing a support for supporting a construction thereabove. The construction may comprise a weight. In at least some examples, the concrete may be negatively buoyant. In particular, the concrete may comprise a density greater than adjacent water. In such, and other, examples, the concrete structure may form part of one or more of: a seabed-mounted structure, a semi-submersible structure, a floating structure. In at least some examples, the concrete may be positively buoyant, such as floating concrete for a floating structure. The construction may be associated with one or more of: a Gravity Based Structure (GBS); floaters; SEMI; SPAR. According to at least some examples, there is provided a method of installing one or more of: a Gravity Based Structure (GBS), floaters; SEMI; SPAR.

The method may comprise installing the structure at a marine location. The structure may comprise an offshore structure, such as for installation at, in, on or above a seabed. The method may comprise installing the structure at a subsea location. The method may comprise installing the structure to be at least partially submerged once installed. The method may comprise installing the structure to be fully submerged once installed. The method may comprise installing the structure to be at least partially floating. The method may comprise installing the structure at a marine location.

According to an aspect, there is provided a marine support structure for an offshore installation. The marine support structure may be a concrete structure configured to support the offshore installation thereon or thereabove. The concrete marine support structure may comprise a passageway for a line. The passageway may comprise a pull-tube for running at least one line between first and second positions of the structure. The passageway may be enclosed with concrete within the structure, with the passageway being integrally-formed therewith.

In at least some examples, there is provided a marine support structure for an offshore installation, the marine support structure being a concrete structure configured to support the offshore installation thereon or thereabove, the concrete marine support structure comprising a passageway for a line, the passageway being a pull-tube for running at least one line between first and second positions of the structure; wherein the passageway is enclosed with concrete within the structure, with the passageway being integrally-formed therewith.

The first and second positions may be vertically spaced from each other. The passageway may extend vertically through or along the structure. The at least one line may comprise one or more of: a cable; an umbilical; and/or a tube. The structure may comprise an offshore support structure for an offshore energy installation such as a wind turbine. The passageway may be surrounded by concrete for an entire periphery, such as in cross-sectional view, along a longitudinal portion of the passageway. The passageway may be formed within a portion of locally-increased thickness. The portion of locally-increased thickness may be defined relative to an adjacent, such as horizontally-adjacent, portion of the concrete structure. The portion of locally-increased thickness may represent a protrusion. The passageway may be associated with a pilaster of the concrete structure. The pilaster may be formed internally, with the portion of locally-increased thickness extending towards an interior of the concrete structure. Additionally, or alternatively, The pilaster may be formed externally, with the portion of locally-increased thickness extending outwards from the concrete structure. The passageway may be at least partially lined by a member functioning as a hollow formwork during formation of the surrounding concrete defining the passageway. Additionally, or alternatively, the passageway may be at least partially unlined, with the pull-tube being defined by a concrete surface of the concrete passageway. For example, the structure may comprise a portion or section of lined passageway; and another portion of unlined passageway.

The passageway may be configured for circulation of a fluid. The fluid may comprise air and/or liquid, such as water (e.g. seawater). The structure may comprise one or more conduits connected to the passageway to provide circulation. In at least some examples, circulation holes and/or conduits may be provided through the concrete pilaster for circulation of water and/or air for cooling of the pull-tube (or line/cable therein). The circulation holes and/or conduits may be provided above and/or below the water level as required. The circulation may be driven by thermal convection and/or natural ventilation. Additionally, or alternatively, the circulation may be a forced flow of a cooling fluid (liquid and/or gas). The pilaster encasing the passageway with pull-tube may terminate between the waterline (or LAT) and the top of the concrete structure's wall (e.g. for geometry and/or constructability reasons).

According to an aspect, there is provided the formwork , the formwork being configured to define the passageway during the method for constructing the marine support structure for the offshore installation.

According to an aspect there is provided a system comprising the apparatus of any other aspect, example, embodiment or claim. The apparatus may comprise the structure or a component thereof, such as comprising a conduit, of any other aspect, claims, embodiment or example.

According to an aspect, there is provided a method of using the apparatus, such as the structure or portion/s thereof, according to an aspect, claim, embodiment or example of this disclosure.

The steps of the method may be in any order.

According to an aspect of, there is provided an apparatus configured to perform a method according to an aspect, claim, embodiment or example of this disclosure.

Within the scope of this disclosure it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION

An embodiment of the present disclosure will now be described by way of example only and with reference to the accompanying drawings, in which:
Figure 1 shows an example of a support structure for an offshore installation:
Figure 2 shows an example of a method according to the present disclosure;
Figure 3 shows an example of a structure according to the present disclosure, in side and plan views;
Figure 4 shows another example of a structure according to the present disclosure;
Figure 5 shows three examples of portions of a structure according to the present disclosure, in Figures 5a, 5b and 5c respectively;
Figure 6 shows another example of a portion of a structure according to the present disclosure;
Figure 7 shows a cross-sectional side view of another example of a structure according to the present disclosure;
Figure 8 shows a cross-sectional side view of another example of a structure according to the present disclosure;
Figure 9 shows a cross-sectional side view of another example of a structure according to the present disclosure;
Figure 10 shows various views and details of another example of a structure according to the present disclosure, with Figure 10a showing a cross-sectional partial side view; Figure 10b showing a detail of an upper portion of Figure 10a, Figure 10b showing a detail sectional view along line A-A shown in Figure 10a; and Figure 10d showing a detail of a lower portion of Figure 10a;
Figure 11 shows a portion of a process of formation according to the present disclosure;
Figure 12 shows a portion of a structure according to the present disclosure;
Figure 13 shows a portion of a structure during construction according to the present disclosure;
Figure 14 shows sequentially a series of steps during a construction process according to the present disclosure;
Figure 15 shows an example of a structure constructed according to a method of the present disclosure;
Figure 16 shows another example of a structure constructed according to a method of the present disclosure;
Figure 17 shows another example of a structure constructed according to a method of the present disclosure;
Figure 18 shows a portion of a structure constructed according to the present disclosure; and
Figure 19 shows a lower portion of a structure constructed according to the present disclosure.

### DETAILED DESCRIPTION

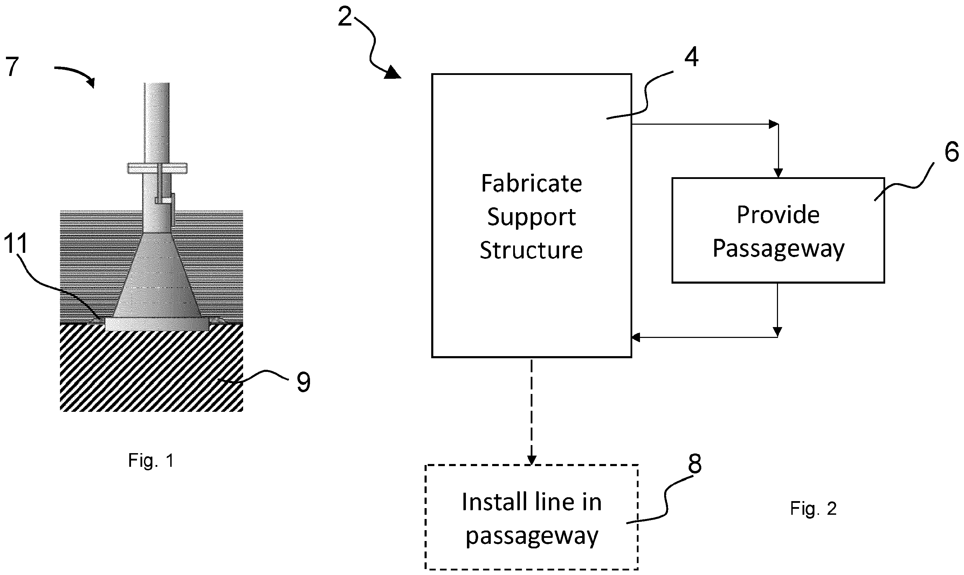

Referring firstly to Figure 1 for context, there is shown an example of a support structure for an offshore installation, such as a wind turbine. Figure 1 shows a Gravity-based structure 7 (GBS), shown here with a scour protection 11 atop a seabed formation 9.

Concrete substructures/foundations for the offshore energy sector can include one or more pull-tubes for Cables and/or Umbilicals, depending on the specific field layout and requirement for each substructure/foundation. Such pull-tubes can either be routed and supported external to the structure, such as for floaters (SEMI or SPAR), or internally within the structure, such as for bottom-fixed structures, such as the GBS 7 of Figure 1. Traditionally, pull-tubes for Cables and Umbilicals of concrete substructures/foundation have been provided as steel pipes supported by steel support structures fixed to external surfaces of the concrete structures, such as in a subsequent fitting step to steel plates embedded in the concrete. For GBS, the pipes are typically routed inside the structure (e.g. in an interior volume), penetrating through the outer concrete wall just above the concrete base slab and routed up through the GBS to a hang-off deck at the top of the structure above water level. For example, a steel pipe can be provided inside the internal cylindrical/conical volume of the GBS 7 shown in Figure 1. The steel pipes are installed after casting of the concrete, requiring significant amount of scaffolding or other means of access arrangements to be erected within the structures (and/or around/outside the structures). For SEMIs, the pipes are typically routed external to the structure from the base of the structure up to an external hang-off deck at the top of the structure above water level. Similar to GBS', the steel pipes are installed after casting of the concrete, requiring significant amount of scaffolding or other means of access arrangements to be erected external to the structures. For the deeper draught SPARs, the pipes are typically routed external to the structure from some level below waterline (typically below the mooring attachments) up along the upper part of the structure up to an external hang-off deck at the top of the structure above water level. Again, the steel pipes are installed after casting of the concrete, possibly requiring stops in the slipforming operation and significant amount of scaffolding or other means of access arrangements to be erected external to the structures.

Referring now to Figure 2, there is depicted an example diagram of a method 2 according to the present disclosure. Initially, a support is fabricated in a first step 4, with the passageway being provided during the process of fabrication 6, of the support formation process. The passageway is originally formed as an integral part of the concrete structure's formation and is not subsequently added or formed in the support structure. It will be appreciated that the line can subsequently be installed in the passageway in a subsequent step 8 of the construction or installation process, such as pulled through (e.g. with a tagline).

Accordingly, it will be appreciated that there are provided methods of constructing a marine support structure for an offshore installation. The method includes forming the concrete structure with a concrete formation process 4; incorporating the passageway for receiving at least one line therein - with the passageway being provided within the concrete structure during the concrete formation process. Accordingly, there is no requirement for the installation of large bore and heavy steel pipes and supports during or after a continuous casting/slipforming operation, such as may otherwise be required for providing a passageway for a pull-tube. The resultant concrete structure formed according to the method of Figure 2 is configured to support the offshore installation thereon or thereabove, such as exemplified in the subsequent figures.

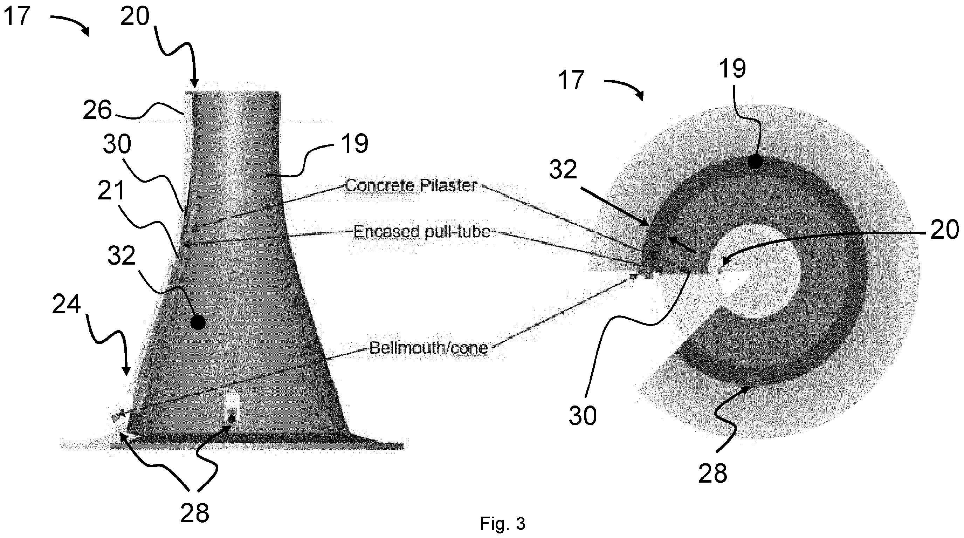

As shown in the examples here, such as in Figure 3 onwards, the passageway 20 is a pull-tube for running the line between first and second positions 24, 26 of the structure 17. For example, with reference to Figure 3, there is shown a GBS 17, the first and second positions 24, 26 being vertically spaced from each other. Here, as shown in the plan view and partial cutaway view of Figure 3b, it can be seen here that the first and second positions 24, 26 are laterally spaced in this example (shown here with the second position 26 at a smaller radius, associated with the particular form of the structure 17 in this example). It will be appreciated that although not shown in Figure 3 explicitly, the method comprises running the line through the passageway 20, with the line being one or more of: a cable; an umbilical; and/or a tube. In this particular example, along with others, the method comprises forming the passageway 20 prior to or during the concrete formation process rather than thereafter. In this case, the concrete forming process comprises a concrete casting formation, such as slipforming, to construct an offshore support structure 17 for an offshore energy installation such as a wind turbine.

The passageway 20 is formed internally within the concrete structure 17, with the passageway 20 being surrounded by concrete for an entire periphery, such as in cross-sectional view, along at least a longitudinal portion of the passageway 20.

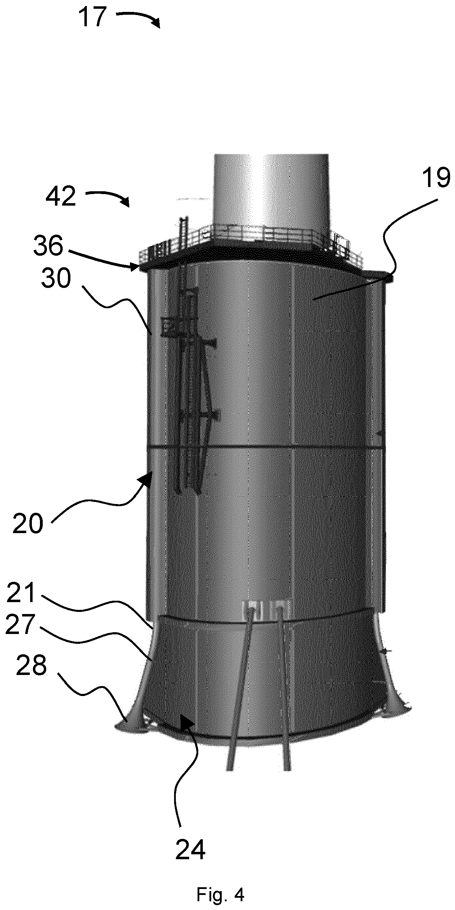

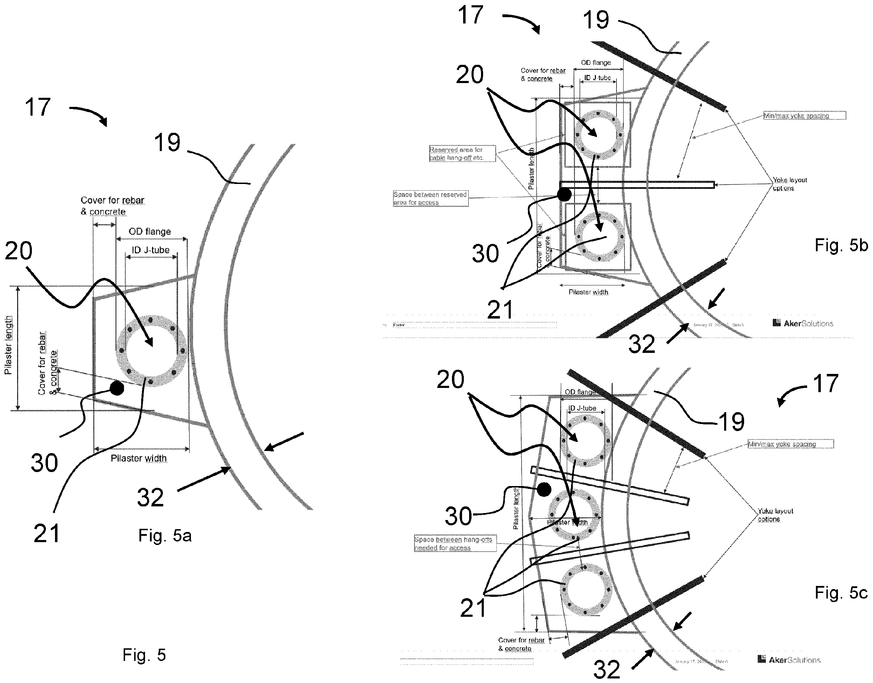

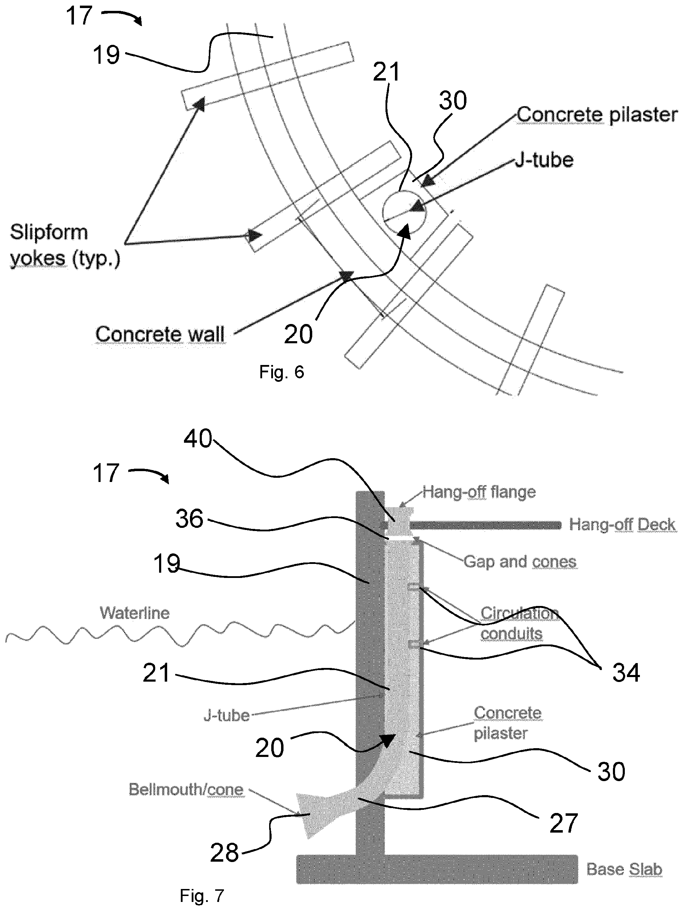

As can be seen in both aspect views of Figure 3, the passageway 20 here is formed within a portion of locally-increased thickness 30. The portion of locally-increased thickness 30 is relatively thicker than an adjacent, thinner portion 32 of the concrete structure. As shown in Figure 3, the portion of locally-increased thickness 30 represents a protrusion in the form of a pilaster of the concrete structure. Here, as also clearly visible in Figures 4 and 5, the pilaster 30 is formed externally, with the portion of locally-increased thickness 30 extending outwards from the concrete structure 17. In other examples, such as shown in Figures 6 and 7, the pilaster 30 is formed internally, with the portion of locally-increased thickness 30 extending towards an interior of the concrete structure 17.

Figure 4 shows the pull-tube 21 extending out of the passageway 20, with the encased concrete passageway 20 running from above a curved portion of pull-tube 21, shown here terminating in a bellmouth 28. The routing of the encased pull-tube 21 shown here is external to the floating concrete foundations 17. The pull-tube's 21 lower end 24 terminates external to the structure 17. It will be appreciated that a preinstalled tagline can be provided and (temporarily) secured to the bellmouth 28 for ease of retrieval of the line (e.g. by a Cable/Umbilical Installation/Pull-in Contractor). The routing of the passageway 20 and the pull-tube 21 dimensions (e.g. inner diameter (ID)) can be configured according to the dimensions of the line pull-in head and minimum bending radius for the line. Accordingly, different structures 17 can have tailored passageways 20 (e.g. routing and dimnesions) to suit different pull-in heads and/or different lines (e.g. with different thickness, stiffness, bending radius, etc.).

For the concrete SEMI 17 of Figure 4, the pilaster 30, with the passageway 20 therein, starts at a pontoon top slab and runs to a top of the concrete wall 19. Accordingly, the routing of the pull-tube 21 can be achieved without requiring an insert box in the slipform. Similarly for a SPAR, the pilaster 30, with passageway 20 therein, can start just above the lower spool/bend and run to the top of the concrete structure 17. Accordingly, a desired azimuth angle and vertical angle adjustment can be taken in the height of a lower exposed spool 27 below the pilaster 30. The hang-off flange is supported above the top of the concrete wall 19 (e.g. on a cover deck 42). There can be a gap 36 provided between a top of the passageway 20, associated with a top of the pilaster 30, and a bottom of the hang-off. Accordingly, heat can be dissipated from the passageway 20 (e.g. from/generated by a cable therein) via the gap 36.

It will be appreciated that the lower spool 27 with a bend and bellmouth 28 can be installed prior to (or even during) casting/slipforming of the wall 19 of the concrete structure 17. Alternatively, the lower spool 27 with a bend and bellmouth 28 could be installed after the casting/slipforming of the structure 27 with integral passageway 20. A post slipform installation can allow more time for detail design and procurement of the bellmouth 28 (e.g. based on detailed input for determination of the vertical angle and surface/shape of the bellmouth 28). Accordingly, the total time, or final endpoint, for finalising the lower spool 27 or bellmouth 28 design can be extended. In at least some examples, the method may comprise adding the lower spool 27. For example, a subsequently-added field welded lower spool 27 can allow for adjustability and flexibility in determination of the cable exit angles (e.g. azimuth and vertical angle). Alternatively, in other examples, the lower spool 27 and/or bellmouth 28 can be provided as a bolted or encased connection.

As shown here, the pull-tubes 21 are provided as pipe spools or concrete tubes 20 encased in concrete pilasters 30 on the outside of the GBS wall 19. The pilaster 30 has been cast during the concrete casting of the concrete wall 19 (e.g. by slipforming). The pipe spools 27 provided for the lower end ensure a desired outlet angle for the cable/umbilical to fit the cable/umbilical configuration in the field (e.g.. azimuth angle and vertical angle), such as determined by a project specific dynamic cable analysis (e.g. as performed by a Cable Contractor/Design Engineer).

Referring now to Figure 5, there are shown cross-sectional views depicting variations of possible arrangements of pull-tubes 21 in a passageway/s 20 respectively in Figures 5a, 5b and 5c. Accordingly, variation in numbers of lines (e.g. High Voltage, "HV", cables and/or umbilicals) can be incorporated within the concrete structures 17 dependent upon project-specific field layout and requirements. Figure 5a shows a single passageway 20 with a single pull-tube 21 in an individual pilaster 30. Figure 5b shows a pair of passageways 20, each comprising a respective pull-tube 21. It will also be appreciated that in at least some examples, multiple lines (e.g. multiple cables or a mix of cables and tubes) may be present in a single passageway 20 or pull-tube 21 (e.g. pulled through as a bundle; or whereby an additional line is subsequently pulled through to supplement or replace a previous line). Figure 5c shows an example of a concrete structure 17 with three passageways 20 arranged circumferentially around the structure 3, within a single portion of increased local thickness in the form of an extended common pilaster 30, protruding radially outward from the structure 17 further than adjacent portions of thinner structure 32. It will be appreciated that the respective passageways 20 can be similar (e.g. similar diameter) or different (e.g. different diameters, different linings or unlined versus lined), such as in dependence on intended lines for pull-tubes 21 of the passageways 20. In other examples, such as that shown in Figure 4, multiple pilasters 30 can be included in a single structure 17.

The additional mass and weight of the concrete pilaster(s) 30 is relatively minor when considering the total mass and weight of the concrete structure 17. The method may comprise adapting the concrete-forming process to accommodate or account for the size and weight of a pilaster 30 for multiple pull-tubes 21. For example, a slipforming operation may be configured to accommodate the additional weight on a single side of the structure 17 (weight eccentricity). The multiple pilasters 30 may be spaced or distributed along and/or around the structure 17. For example, as shown in Figure 4, a pair of pilasters may be spaced to balance volume and/or weight distribution in or around the structure 17. It will be appreciated that in some examples, there is a plurality of (spaced) pilasters 30 in a single concrete structure 17, each pilaster 34 housing a plurality of passageways 20.

As shown in Figure 5, space is provided between hang-offs (e.g. for access). The casting process (e.g. slipforming) is performed here with cover for the rebar and concrete to form the pilaster(s) 34 simultaneously with the wall 19 of the structure 17. It will be appreciated that the pilaster 34 is formed to provide at least a minimum thickness of concrete all around the periphery (e.g. circumference) of the passageway 20. As also shown in Figure 5 (see also Figure 6), the pilaster(s) 34 are formed in gaps between yokes for the casting/slipforming. For example, the pilasters 34 are separated by a minimum distance or offset from the yokes (e.g. 150mm as depicted here). The pilaster 34 can be shaped and positioned to account for or in dependence on the yokes. As shown in figures 5 and 6, the pilasters 30 can be shaped to provide a robust protection and/or joint with the structure 17. For example, the pilasters' 30 cross-section can taper away from the structure wall 19.

It will be appreciated that in at least some examples, the concrete passageway 20 provided or formed in the concrete structure 17 is defined by hollow formwork 23 during the concrete forming step. The hollow formwork 23, optionally remaining in situ after completion of the concrete formation, thus defines an interior volume of the passageway 20 along at least a portion of the length of the passageway 20. Effectively, the hollow formwork 23 provided during concrete formation defines a liner 25 of the passageway 20 upon formation of the concrete structure 17 in at least some examples (where left in situ).

It will be appreciated that routing the pull-tubes 21 in one or more concrete pilasters 30 can enable an advantage from a construction/fabrication and/or schedule perspective. For example, at least the majority of the pull-tubes 21 are already installed during casting of the walls of the structure 17 (e.g. by slipforming) and thereby eliminating or reducing the need for erecting scaffolding or other means of access all the way up along the walls 19 of the structure 17 after completion of the concrete casting operation for installing the pull-tubes and necessary supports. Accordingly, it can be possible to eliminate, or at least reduce, the associated work at height; and/or potential work in confined space; and/or and potential simultaneous operations (SIMOPS) with activities above or below. Accordingly, examples of methods according to the present disclosure can mitigate or at least improve HSE risks; and/or reduce the overall operation/execution schedule.

As shown in the various figures, it will be appreciated that the encased pull-tubes 21 can be either external or internal to the concrete outer walls 19. Either way, the passageways 20 defining the pull-tubes 21 can be cast in the same casting sequence, simultaneously as the main wall of the structure 17, forming the pilaster/s 30 on the surface of the wall 19 of the structure 17.

The pull-tubes 21 provided here encased in concrete pilasters 30, whether internally within the structure 17 or protruding externally from the structures 17, are protected. For example, the pilasters 30 provide protection from ship impact or environmental forces (e.g. from waves and current). Likewise, whether located internally or externally, the pull-tubes 21 are also protected by the concrete (walls 19 and/or pilasters 30) from potential damage internally (e.g. from installation of solid ballast material within the structure 17). Accordingly, types of-; and/or materials used for-; concrete pull-tubes 21 can provide benefits over conventional systems. For example, such pull-tubes 21 can enable easier and/or cheaper installation; such as requiring less support, simpler handling and fabrication relative to a conventional, externally-mounted, exposed steel pipe pull-tube system. It will also be appreciated, that the pull-tubes 21 shown here also benefit from additional possible protections. For example, the pull-tubes 21 here can be shielded from solar radiation. Especially in offshore wind applications, shielding the pull-tubes 21, such as with HV power cables therein, from direct solar radiation (heat flux) can be beneficial for the HV cable temperature and design life of the cable.

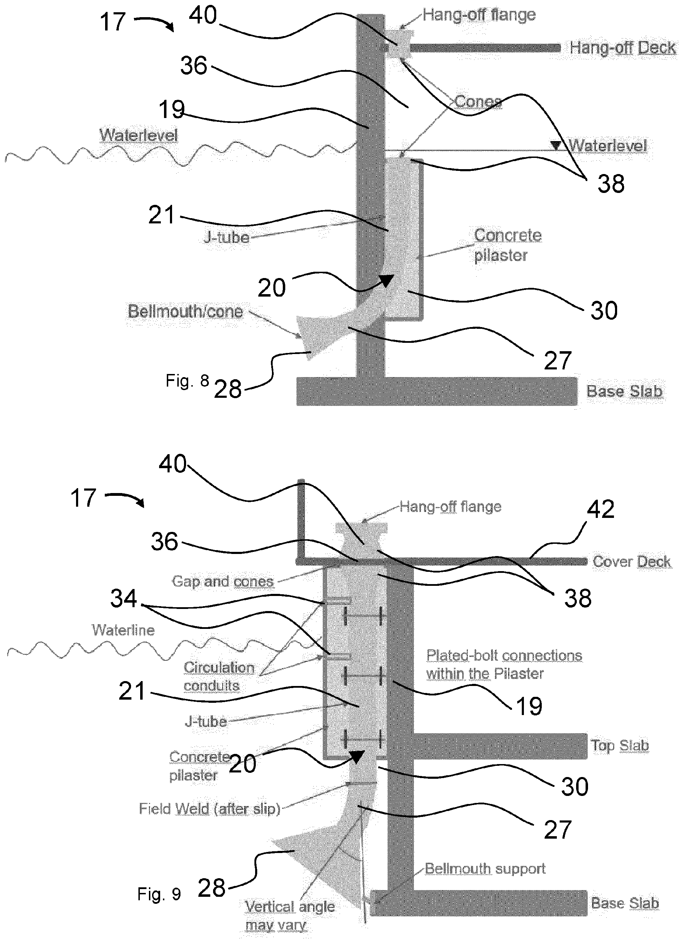

Referring now to Figure 7, there is shown a GBS 17 with a pull-tube 21 encased in a pilaster 30 that extends above the water level. Here, the pull-tubes 21 are encased all the way from the lower end termination and up to the top of thye concrete. It will be appreciated that in other examples, the encasement starts after the lower end spool with the bellmouth/cone 28. In other examples, the encasement stops (just) below the waterline (e.g. for a floater); or below LAT (Lower Astronomical Tide), such as for a GBS 17 as shown in Figure 8. For example, terminating the encased passageway 20 below the waterline or LAT can provide for water circulation in the pull-tube 21 (e.g. for cooling purposes).

In at least some examples, circulation holes and/or conduits 34 are provided through the concrete pilaster 30 for circulation of water and/or air for cooling of the pull-tube 21 (or line therein). The circulation holes and/or conduits 34 are provided above and/or below the water level as required. The circulation can be driven by thermal convection and/or natural ventilation. Additionally, or alternatively, the circulation can be a forced flow of a cooling fluid (liquid and/or gas). In the examples shown in Figure 7 and 9, additional (e.g. lateral) conduits 34 are provided through the pilaster 30 and into the passageway 20 for circulation of water and/or air for cooling the pull-tube 21. In at least some examples, the pilaster 30 encasing the passageway 20 with pull-tube 21 terminates between the waterline (or LAT) and the top of the concrete structure's wall 19 (e.g. for geometry and/or constructability reasons).

As clearly shown in Figure 8, the upper end of the pull-tube 21 in the concrete passageway 20 is provided with a cone 38. The cone 38 is below the gap 36 between the encased pull-tube 21 and the separate hang-off spool 40. The cone 38 can assist during installation of the line (e.g. guiding cable) and/or prevent or at least mitigate damage to the line (e.g. compared to examples without cones where wear between an edge of the pull-tube 21 and the cable could occur). The gap 36 can be useful in providing access to the cable (not shown in Figure 8) or pull-tube 21 and/or for heat dissipation from the cable. The gap 36 can also be beneficial for ease of fabrication and installation and for handling and adjusting installation tolerances (e.g. where these can be significantly different between concrete casting elements and steel fabrication elements). As shown in Figure 9, the gap 36 between the concrete encased passageway 20 and the hang-off spool 40 can be located at other positions and of different proportions. In the example shown in Figure 9, the gap 36 is at the cover deck 42.

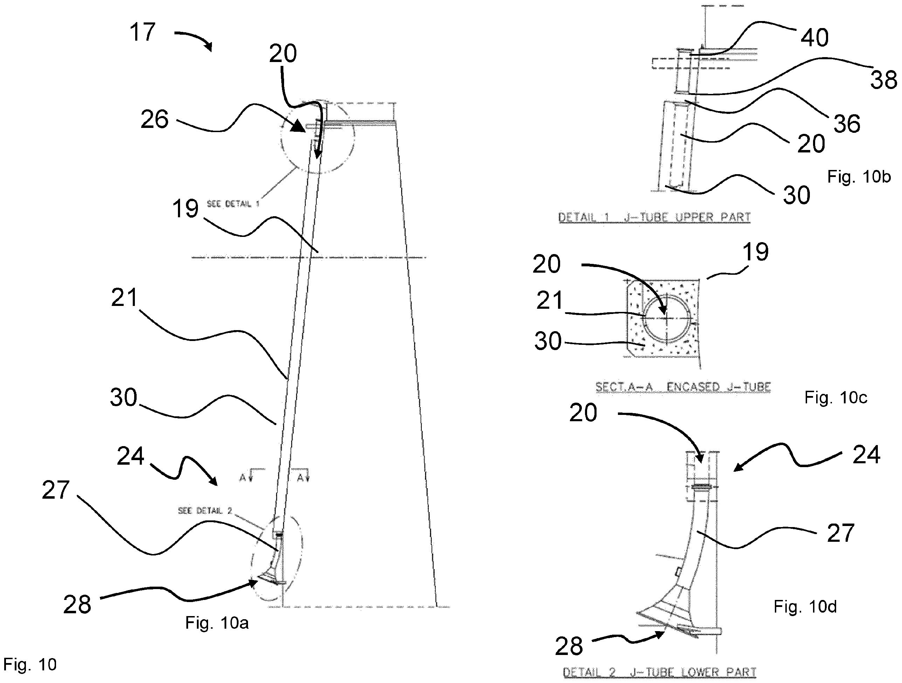

Figure 10 shows various views of a concrete-encased pull-tube 21 routed through a passageway 20 in a concrete SPAR structure 17. As shown here, the external pull-tubes 21 (located in a passageway 20 through a pilaster 30 on an external surface of the concrete wall 19 of the structure 17) , connects to a lower end 27. It will be appreciated that the lower end 27 can be installed and encased during the main slipforming operation. Alternatively, the lower end 27 can be installed after the main slipform. The timing of the installation of the lower end 27 can be decided based on constructability and schedule considerations for the specific project.

Similarly, for internal pull-tubes 21 (located in a passageway 20 through a pilaster 30 on an internal surface of the concrete wall 19 of the structure 17), such as shown in Figure 8, the lower end 27 (e.g. pipe spool) can be installed and encased during the main slipforming operation. Alternatively, the lower end 27 can be installed after the main slipform, such as installed through a sleeve or a block out in the concrete wall 19 and cast in separately after the main slipform.

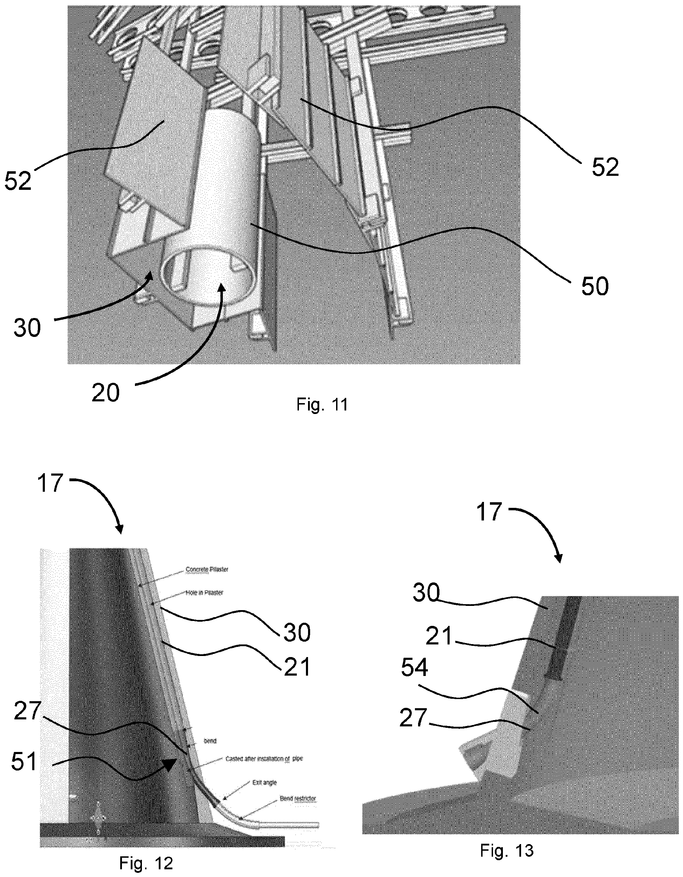

Referring now to Figure 11, there is shown a sample of drag pipe in concrete pilaster 30 during slipform. As described above, the pull-tubes 21 can be provided as pipe spools or concrete tubes 20 encased in concrete pilasters 30 on the inside of the GBS wall 19. The pilaster 30 is cast during the concrete casting of the concrete wall 19 (e.g. by slipforming). Accordingly, any potential work in confined space inside the structure 17 associated with installation of a traditional pull-tube is significantly reduced or eliminated. Here, the passageway 20 is formed within the hollow pipe section 50, which can be left in situ after the casting to effectively line the passageway 20 if required - or removed (e.g. during/after slipforming, such as for casting at/in a next (higher) portion of the structure 17). It will be appreciated that the pilaster 30 is formed using a section of formwork 52, similar to other formwork used for forming the concrete structure 17. Rebar, concrete, etc. is positioned in the volume defined by the formwork 52, including the pipe section 50, to form the concrete structure's wall 19 with integral pilaster 30 comprising the passageway 20 therewithin. Accordingly, the concrete pilaster 30 is an integrated part of the wall slipform system and shaped as the slipform operation is progressing. It will be appreciated that a similar process of pilaster 30 and passageway 20 formation is performed, whether internally within the structure (on an interior surface of the wall 19) or externally (on an external surface of the wall 19). The passageway 20 formed in the pilaster 30 is shaped by the pipe section 50. It will be appreciated that the pipe section can be: a thin-walled steel pipe, HDPE pipe or a drag pipe shaping a recess/hole in the concrete pulled up by the slipform "Concrete tube". The pilaster 30 and passageway 20 start point is established by the pipe spool 50 protruding from the bottom formwork 52 to connect to the lower end spool 27 with the bellmouth 28 (not visible in Figure 11).

Referring now to Figure 12, there is shown an example of sleeve (pipe in pipe sleeve) used to define the pull-tube 21. Here, a sleeve 51 (pipe in pipe sleeve) is installed during slipforming and a lower end of the pull tube 27 (with bend) is installed after completion of the wall 19 construction by installing the pull tube lower spool 27 through the sleeve 51 (e.g. of steel) and connected to the pipe/pull-tube 21 in the pilaster 30. Any gap between the sleeve 51 and the pull tube lower spool 27 will then be grouted. It will be appreciated that such examples are particularly useful for providing an encased pull-tube 21 for bottom-fixed and floating concrete foundations 17 (GBS, SEMI or SPAR).

With reference to Figure 13, there is shown an example with a block-out 54 (area without concrete) formwork system to shape the block-out 54 installed during slipforming. The lower end of the pull tube 21 (with bend) is installed after completion of the wall 19 construction by installing the pull tube lower spool 27 through the block-out 54 and connecting to the passageway 20 in the pilaster 30. The block-out 54 can then be poured to encase the lower end spool/penetration 27, such that the lower end 27 is also encased in concrete.

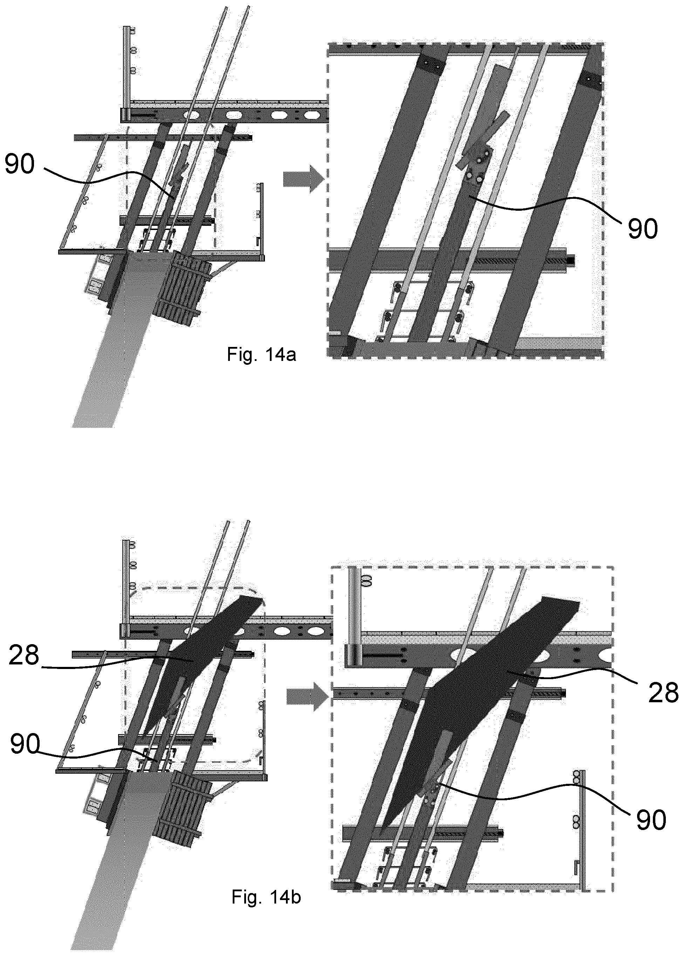

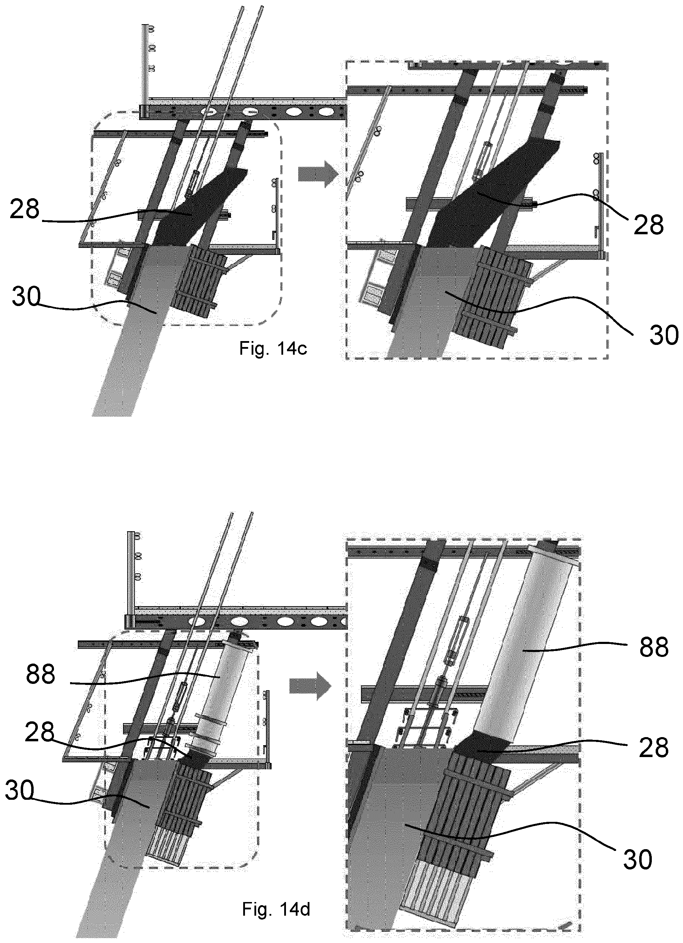

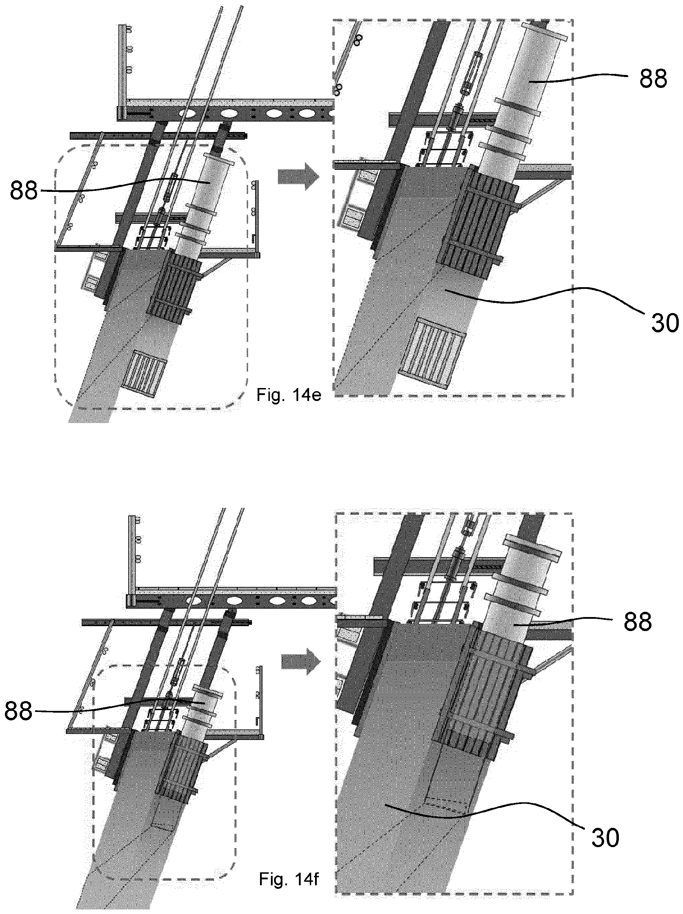

Referring now to Figure 14, there is shown a sequential series of examples of the formation of a lower end 27 for a bellmouth 28. It will be appreciated that similar processes can be used for forming other features of the passageway 20 as required. Figure 14a shows the installation of a support beam in the concrete. Figure 14b shows the installation of the bellmouth sleeve. Figure 14c shows the bellmouth 28 guided into the sleeve form 30. Figure 14d shows the disconnection of the insert box and installation of the drag pipe 88, As the bellmouth sleeve 28 is about to enter the slipform the insert box for the concrete pilaster will be disconnected.. Figure 14e shows the removal of the insert box below the slipform panels. With the top of the bellmouth sleeve 28 in a workable elevation, the drag pipe 88 is installed. It will be appreciated that other examples, such as steel pipe or HDPE pipe, can be used instead of drag pipe 88. Figure 14f shows the securement of the drag pipe 88 to the slipform rig.

Accordingly, the bellmouth sleeve 28 is installed during slipforming by establishing a support system to install, fix and secure the bellmouth sleeve 28 in correct position.

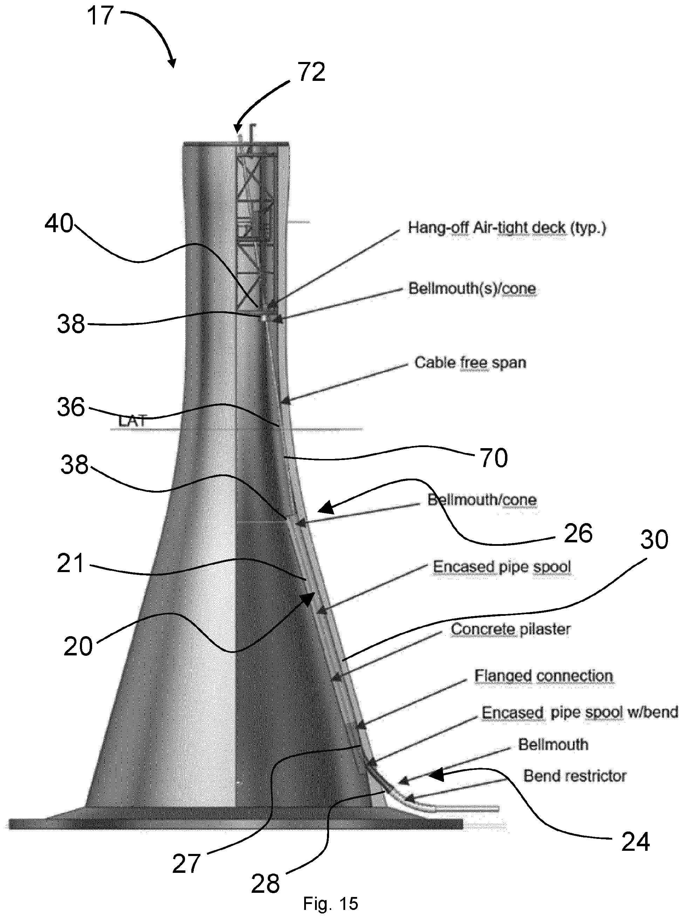

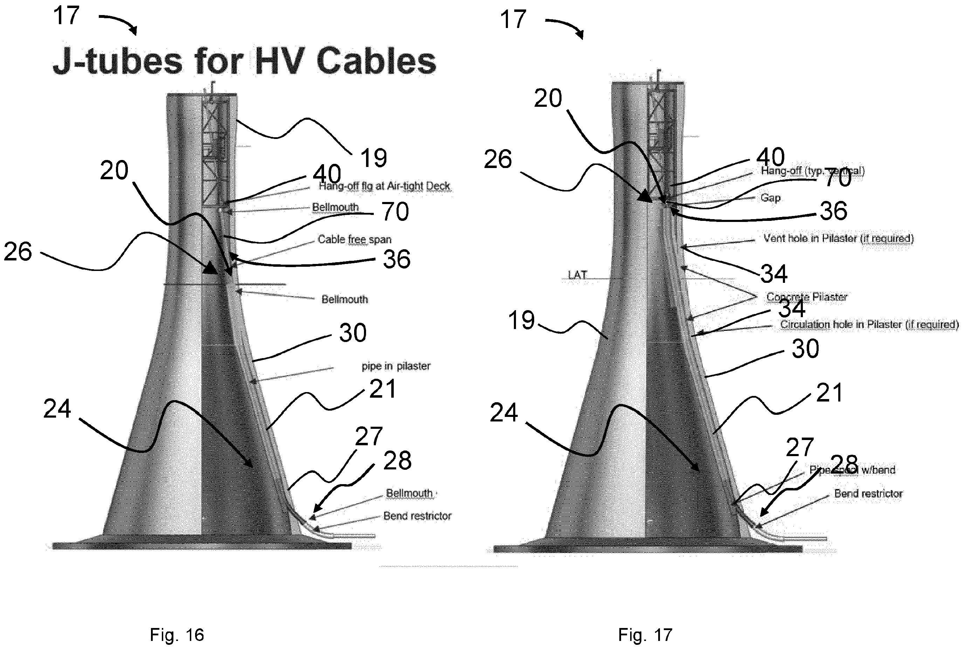

Referring now to Figure 15, there is shown an example of a GBS structure 17 with a concrete-encased pull-tube 21 terminated below the LAT. The upper position 26 of the passageway 20 is below the LAT. As shown here, sections of free, unencased cable span 70 can be combined with encased pull-tube 21 within the concrete passageway 20. The encased portion can correspond to where protection is desired, or more desired. For example, with the internally-routed pull-tube 21 of Figure 15, the concrete pilaster 30 provides internal protection, such as from ballast (not shown) added to the structure 17. Figure 16 shows a generally similar structure 17. Here the termination of the pilaster 30 with passageway 20 is at the LAT. Again, a section of free, unencased cable span 70 extends from the concrete-encased passageway 20 to the hang-off 40 thereabove. Here cones or bellmouths 38 (a pair shown here) provide transitions between the unencased section 70 and the respective hang-off 40 and upper termination 26 of the encased passageway 20. Figure 17 shows a generally similar structure 17, with the termination of the pilaster 30 with passageway 20 here being above the LAT. Examples here can include vent and circulation holes 34 in the pilaster 30. The unencased portion 70 here is relatively short, extending across the gap 36 between the upper position 26 of the passageway 20 and the hang-off 40.

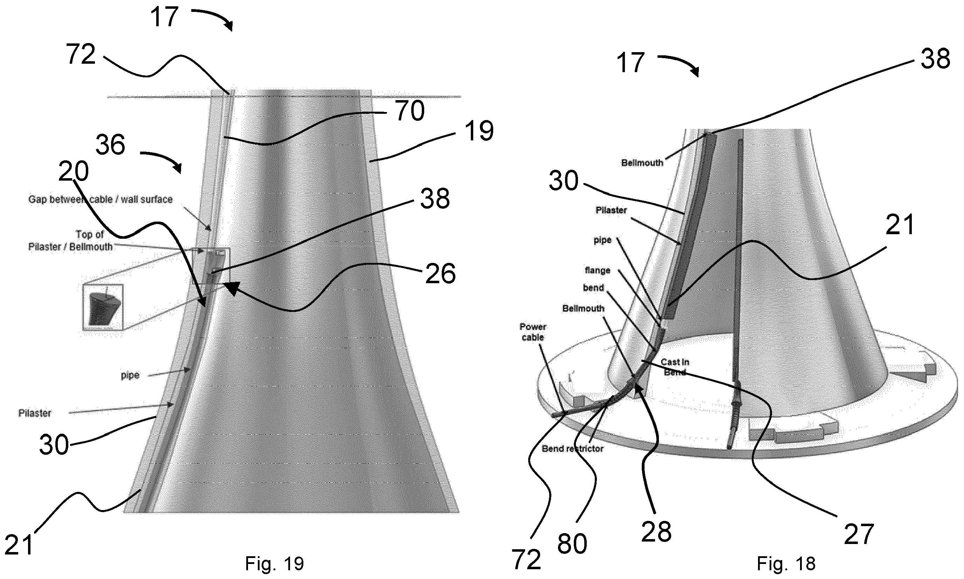

With reference to Figure 18, there is shown a portion of a structure 17, with a bellmouth 28 at the lower end 27, where the bend is cast in the concrete. In this example, it can be seen that various material combinations are possible, such as with HDPE pipes lining the passageway 20 and forming the flanges and connections. It will be appreciated that the cable 72 can enter/exit the pull-tube 21 with the aid of a bend restrictor 80, with the cable 72 extending away from the structure 17 (e.g. along the seabed and/or to another structure, etc.).

Figure 19 shows an example of an upper end 26 of a passageway 20 in a pilaster 30. Here, it can clearly be seen that a bellmouth or cone 38 is provided at the transition of the cable 72 between the encased pull-tube 21 and the free section 70 that extends upwards to the hang-off (not shown in Figure 18). It will be appreciated that in the examples shown various material combinations are possible. For example, the pull-tubes 21 or portions/segments thereof, can be comprised of one or more of: steel pipe spools; PEH/HDPE pipe spools; hard plastic double-barrelled pipe spools; FRP/GRP pipe spools; concrete tube; and/or lined concrete tube. For routing where there are bends in the pull-tube 21, sections with steel pipe spools can be provided. The provision of such steel sections can help to ensure sufficient hardness of the pull-tube 21 (e.g. to handle the loads and abrasion from a steel pull-in wire). However, in at least some examples, straight sections of the pull-tube 21 can be provided as plastic or composite pipe spools. Likewise, in some examples, curved or straight sections can be devoid of the formwork and just be a concrete tube (with or without internal lining). It will be appreciated that transitions between pipe spool segments or between different materials are smooth. Accordingly, sharp edges are avoided - which could otherwise wear on the lines (e.g. HV cables); or potentially be snag points during the cable pull-in operation. In at least some examples, cones/bellmouths or sleeve-in-sleeve transitions are provided.

It will be appreciated that the provision of such encased pull-tube solutions enables the completion of the installation of the pull-tube and necessary supports during the concrete casting operation of the primary structure walls (e.g. slipforming). Accordingly, a need for erection of scaffold or other means of access for installation and fixation (support) of the pull-tubes after the concrete casting operation can be eliminated or at least reduced. Accordingly, the overall execution schedule can be reduced. Other benefits can include an elimination/reduction of work at height (safety issue) and potential simultaneous operations (SIMOPS) with activities above or below.

It will be appreciated that, although schematic, the relative proportions of the elements shown are shown to scale with the other elements shown. Accordingly, the schematic depictions provide an accurate indication of relative parameters, such as relative thicknesses, lengths, etc.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims, including with equivalence.

## Claims

1. A method of constructing a marine support structure for an offshore installation, the method comprising:
forming at least a portion of the marine support structure as a concrete structure with a concrete formation process, the concrete structure being configured to support the offshore installation thereon or thereabove;
providing a passageway for receiving at least one line therein;
wherein the method comprises providing the passageway within the concrete structure during the concrete formation process.

2. The method of claim 1, wherein the passageway is a pull-tube for running the at least one line between first and second positions of the structure, the first and second positions being vertically spaced from each other; and wherein the method comprises running the at least one line through the passageway, with the at least one line comprising one or more of: a cable; an umbilical; and/or a tube.

3. The method of claim 1 or 2, wherein the method comprises forming the passageway within the concrete structure during the concrete formation process rather than thereafter; and/or wherein the concrete forming process comprises a concrete casting formation, such as slipforming.

4. The method of any preceding claim, wherein the method comprises constructing an offshore support structure for an offshore energy installation such as a wind turbine; and/or wherein the passageway is formed internally within the concrete structure, with the passageway being surrounded by concrete for an entire periphery, such as in cross-sectional view, along a longitudinal portion of the passageway.

5. The method of any preceding claim, wherein the passageway is formed within a portion of locally-increased thickness, the portion of locally-increased thickness being defined relative to an adjacent, such as horizontally-adjacent, portion of the concrete structure.

6. The method of claim 5, wherein the portion of locally-increased thickness represents a protrusion, with the passageway being associated with a pilaster of the concrete structure; and optionally wherein the pilaster is formed internally, with the portion of locally-increased thickness extending towards an interior of the concrete structure; and/or optionally wherein the pilaster is formed externally, with the portion of locally-increased thickness extending outwards from the concrete structure.

7. The method of any preceding claim, wherein the passageway is defined by hollow formwork during the concrete forming step; with the hollow formwork remaining in situ after completion of the concrete formation such that the hollow formwork defines an interior volume of the passageway along at least a portion of the length of the passageway.

8. The method of any preceding claim, wherein the method comprises longitudinally extending the passageway after completion of concrete formation, by connecting a length/s of pipe or tubing to the concrete passageway.

9. A marine support structure for an offshore installation, the marine support structure being a concrete structure configured to support the offshore installation thereon or thereabove; the concrete marine support structure comprising a passageway for a line, the passageway being a pull-tube for running at least one line between first and second positions of the structure; wherein the passageway is enclosed with concrete within the structure, with the passageway being integrally-formed therewith.

10. The structure of claim 9, wherein the first and second positions are vertically spaced from each other, the passageway extending vertically through or along the structure; and wherein the at least one line comprises one or more of: a cable; an umbilical; and/or a tube; and/or wherein the structure comprises an offshore support structure for an offshore energy installation such as a wind turbine.

11. The structure of claim 9 or 10, wherein the passageway is formed within a portion of locally-increased thickness, the portion of locally-increased thickness being defined relative to an adjacent, such as horizontally-adjacent, portion of the concrete structure.

12. The structure of claim 11, wherein the portion of locally-increased thickness represents a protrusion, with the passageway being associated with a pilaster of the concrete structure; and optionally wherein the pilaster is formed internally, with the portion of locally-increased thickness extending towards an interior of the concrete structure; and/or optionally wherein the pilaster is formed externally, with the portion of locally-increased thickness extending outwards from the concrete structure.

13. The structure of any of claims 9 to 12, wherein the passageway is at least partially lined by a member functioning as a hollow formwork during formation of the surrounding concrete defining the passageway; and optionally wherein the formwork is configured to define the passageway during the method of any of claims 1 to 9 for constructing the marine support structure for the offshore installation.

14. The structure of any of claims 9 to 13, wherein the passageway is surrounded by concrete for an entire periphery, such as in cross-sectional view, along a longitudinal portion of the passageway; and/or wherein the passageway is at least partially unlined, with the pull-tube being defined by a concrete surface of the concrete passageway.

15. The structure of any of claims 9 to 14, wherein the passageway is configured for circulation of a fluid; and optionally wherein the structure comprises one or more conduits connected to the passageway to provide circulation.
